# EUROPEAN PATENT APPLICATION

(11) **EP 4 757 055 A1**
(43) Date of publication of application: **10.06.2026**
(21) Application number: 25830910.3
(22) Date of filing: 19.05.2025
(51) Int. Cl.: H01M 50/567, H01M 50/538, H01M 50/188, H01M 10/04

(54) **BATTERY CELL AND MANUFACTURING METHOD THEREFOR**

(30) Priority: 21.06.2024 KR 20240081413; 12.05.2025 KR 20250061340
(71) Applicant: LG Energy Solution, Ltd., Seoul 07335 (KR)
(72) Inventor: PARK, Ji Min, Daejeon 34122 (KR); SHIN, Hangsoo, Daejeon 34122 (KR)
(74) Representative: Goddar, Heinz J.
(86) International application number: PCT/KR2025/006746
(87) International publication number: WO 2025/263849

(57) **Abstract**

A battery cell and a manufacturing method therefor are disclosed. The battery cell comprises: a can housing in which an electrode assembly is accommodated, and which has a terminal hole; a current collector plate disposed at an axial end of the electrode assembly; an insulator interposed between the can housing and the current collector plate; an electrode terminal unit inserted into the terminal hole; and a terminal bolt unit fastened to the current collector plate through the electrode terminal unit so as to be secured by the current collector plate.

## Description

### [TECHNICAL FIELD]

This application claims the benefit of priority based on Korean Patent Application No. 10-2024-0081413 filed on June 21, 2024, and Korean Patent Application No. 10-2025-0061340 filed on May 21, 2025, entire contents disclosed in the documents of the patent applications are included as a part of this specification.

The present invention relates to a battery cell and a manufacturing method thereof, capable of: preventing damage to a separator due to welding heat by omitting welding of an electrode terminal to a current collecting plate; reinforcing the fastening force and structural rigidity of the electrode terminal to a can housing; expanding a current path of the electrode terminal to the current collecting plate; and allowing injection of electrolyte through an electrode terminal.

### [BACKGROUND ART]

Generally, a cylindrical battery cell includes a can housing and an electrode assembly. The can housing may be manufactured by subjecting a metal sheet to deep drawing to form a circular bottom and a circular tube-shaped side wall member connected thereto. The electrode assembly is accommodated in the can housing.

Generally, in a cylindrical battery cell, the can housing may be electrically connected to the first electrode of the electrode assembly, and the cap assembly, which closes the opening of the can housing, may be electrically connected to the second electrode of the electrode assembly. Accordingly, the can housing may constitute the first electrode, and the cap assembly may constitute the anode.

Recently, a new type of cylindrical battery cell has been developed. The battery cell has an electrode terminal installed in a terminal hole at the bottom of the can housing, and the opening of the can housing is closed with a cap. An insulating gasket is interposed between the electrode terminal and the can housing. A first current collecting plate and a second current collecting plate connected to the first and second electrodes of the electrode assembly, respectively, are welded to the two axial ends of the electrode assembly, respectively. The first current collecting plate may be welded to the cap, and the second current collecting plate may be welded to the electrode terminal.

However, the high temperature energy and spatter generated during the process of welding the current collecting plate to the electrode terminal and the cap in the battery cell may tear or damage the separator of the electrode assembly. When the separator is torn or damaged, the anode and cathode may come into electrical contact with each other, causing a short circuit, which may cause a fire.

In addition, the current collecting plate may be resistance welded, ultrasonic welded, or laser welded. Here, welding defects may occur due to poor flatness or poor exterior of the current collecting plate. When a defect occurs in the welding area of the current collecting plate, the tensile strength of the welding area is significantly reduced, which may cause low voltage generation.

In the battery cell, an insulator is installed for electrical insulation between the can housing and the current collecting plate. The insulator is interposed between the bottom of the can housing and the current collecting plate. Since the insulator is in the form of a flat plate with a certain thickness and the current collecting plate is also in the form of a flat plate, the current collecting plate must be strongly pressed with an ultrasonic welding horn in order to bring the current collecting plate into contact with the electrode terminal. The current collecting plate may be deformed during such process.

Accordingly, the current collecting plate may be excessively deformed, and the welding area may be pre-tensioned, which may have an adverse effect on the welding strength. In addition, vibrations or shocks generated while using the battery cell may affect the welding area, which may cause the welding area to be detached or the current collecting plate to crack. In particular, the occurrence of repetitive and continuous tension and stress may cause fatigue failure. When such phenomenon occurs, the electrical connection between the electrode terminal and the current collecting plate is damaged such that the battery cell may lose its function.

The background art of the present invention is disclosed in Korean Patent Application Publication No. 2022-0113654 (published on August 16, 2022, titled "Fixing Structure of Electrode Terminal, and Battery, Battery Pack and Vehicle Including the Same").

### [DISCLOSURE]

### [TECHNICAL PROBLEM]

In order to solve above-described problems, it is an object of the present invention to provide a battery cell and a manufacturing method thereof wherein the electrode terminal is electrically connected to the current collecting plate without welding to allow omitting the welding process.

It is an object of the present invention to provide a battery cell and a manufacturing method thereof wherein damage to the separator of the electrode assembly is prevented by not generating spatter or heat from welding.

It is an object of the present invention to provide a battery cell and a manufacturing method thereof capable of significantly reducing the risk of short circuit or fire.

It is an object of the present invention to provide a battery cell and a manufacturing method thereof capable of significantly increasing the bonding strength and structural rigidity of the electrode terminal.

It is an object of the present invention to provide a battery cell and a manufacturing method thereof capable of preventing an electrode terminal from being ejected or detached from a terminal hole of a can housing during thermal runaway of a battery cell.

It is an object of the present invention to provide a battery cell and a manufacturing method thereof wherein a bonding between an electrode terminal and a current collecting plate is stably maintained even under vibration or impact.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The present invention may be applied to a battery cell having a structure wherein an electrode terminal and a current collecting plate are electrically connected.

The battery cell includes an electrode assembly and a can housing accommodating the electrode assembly therein.

The can housing is provided with a terminal hole.

The terminal hole may be provided at the bottom of the can housing. Preferably, the terminal hole may have a circular shape and be provided at the center of the can housing.

A current collecting plate is installed at the electrode assembly. The current collecting plate may be electrically connected to a first electrode of the electrode assembly.

The current collecting plate is disposed at an axial end portion of the electrode assembly.

An electrode terminal is inserted into the terminal hole. The electrode terminal may penetrate the terminal hole.

A terminal bolt penetrating the electrode terminal and fastened to the current collecting plate is installed at the electrode terminal.

The terminal bolt is at least restrained by the current collecting plate.

The terminal bolt may bring the current collecting plate into contact with the electrode terminal in the axial direction.

The electrode terminal may include: a terminal head compressing a periphery of the terminal hole; and a terminal insert extending from the terminal head and inserted into the terminal hole.

The terminal head may extend radially outward from the axially outer end portion of the terminal insert.

The terminal bolt penetrates the terminal insert to be fastened to the current collecting plate.

The electrode terminal may further include: a plastically deformed portion extending from the terminal insert and bent so as to compress the periphery of the terminal hole while facing the terminal head.

The plastically deformed portion may include: a plastically deformed rib arranged along a circumferential direction at an end portion of the terminal insert.

The plastically deformed ribs extend continuously or intermittently along the circumferential direction. For example, a plurality of plastically deformed ribs may be arranged so as to be aligned along the circumferential direction, or a single plastically deformed rib having a circular tube shape may be arranged so as to extend in the circumferential direction.

The terminal insert may be provided with a bolt hole where a bolt body of the terminal bolt may be inserted.

In some embodiments, the inner diameter of the bolt hole may be smaller than the outer diameter of the bolt body such that a periphery of the bolt hole is plastically deformed as the bolt body is inserted.

In some embodiments, the diameter of the bolt hole may be equal to or larger than that of the terminal bolt.

The terminal head may be provided with an accommodating groove for accommodating the bolt head of the terminal bolt.

The current collecting plate may be provided with a restraining tab into which the terminal bolt is screwed.

In some embodiments, the current collecting plate has a flat plate shape, and the height of the restraining tab may be equal to or smaller than the thickness of the current collecting plate.

In some embodiments, the current collecting plate may include: a flat plate portion having a flat plate shape; and a protrusion protruding in an axial direction from the flat plate portion at a position corresponding to the terminal hole, and the restraining tab penetrates the protrusion.

In some embodiments, the battery cell may further include: a sealing member installed between a bolt head of the terminal bolt and a bottom surface of an accommodating groove of the terminal head.

In some embodiments, the battery cell may further include: a gasket interposed between an inner circumferential surface of the terminal hole and an outer circumferential surface of the electrode terminal to electrically insulate the electrode terminal from and seal the can housing.

The present invention provides a manufacturing method of a battery cell having the above-described structure. The manufacturing method of the battery cell may include: preparing a can housing provided with a terminal hole: inserting a gasket into the terminal hole in an axial direction; inserting an electrode terminal into the terminal hole from axially outer side of the terminal hole; and restraining the electrode terminal in the terminal hole by bending a plastically deformed portion of the electrode terminal radially outward.

The manufacturing method of the battery cell includes: inserting an electrode assembly with a current collecting plate welded thereto into the can housing and arranging a restraining tab of the current collecting plate to correspond to a bolt hole of the electrode terminal.

The manufacturing method of the battery cell includes: fastening a terminal bolt to the restraining tab after passing the terminal bolt through the bolt hole.

The manufacturing method of the battery cell may further include: providing a terminal bolt with a bolt body having a diameter larger than that of the bolt hole such that a periphery of the bolt hole is plastically deformed as the bolt body is inserted.

The manufacturing method of the battery cell may further include: providing the current collecting plate including a flat plate portion having a flat plate shape and a protrusion protruding in an axial direction from the flat plate portion at a position corresponding to the terminal hole So as to expand an axial section where the restraining tab is fastened to the current collecting plate.

### [ADVANTAGEOUS EFFECTS]

According to the present invention, since the terminal bolt is fastened to the current collecting plate, it is not necessary that the electrode terminal and the current collecting plate are welded, thereby omitting the welding process.

According to the present invention, since the welding process between the electrode terminal and the current collecting plate may be omitted, damage to the separator in the electrode assembly may be prevented, and the risk of short circuit between electrodes or thermal runaway may be significantly reduced.

According to the present invention, since the terminal bolt is fastened to the current collecting plate, the current collecting plate is not required to be in strong contact with the electrode terminal in the axial direction for welding. Accordingly, the current collecting plate may be prevented from being pre-tensioned.

According to the present invention, since the terminal bolt is screwed to the restraining tab provided in the protrusion of the current collecting plate, the bonding force and structural rigidity of the electrode terminal and the current collecting plate may be significantly increased.

According to the present invention, since the bonding force and structural rigidity of the electrode terminal are significantly increased, the electrode terminal may be prevented from being ejected or detached from the terminal hole of the can housing during thermal runaway of the battery pack.

In addition to the advantageous effects described above, specific effects of the present invention will be described further while describing specific details of the present invention.

### [BRIEF DESCRIPTION OF DRAWINGS]

FIG. 1 is an exploded perspective view schematically illustrating electrodes and separators separated from each other constituting a battery cell according to the present invention.
FIG. 2 is a perspective view schematically illustrating the electrodes and separators of FIG. 1 stacked on one another.
FIG. 3 is a perspective view schematically illustrating a cylindrical electrode assembly according to the present invention.
FIG. 4 is a cross-sectional view schematically illustrating a battery cell according to a first embodiment of the present invention.
FIG. 5 is a cross-sectional view schematically illustrating a coupling structure of an electrode terminal of the battery cell of FIG. 4.
FIG. 6 is an exploded view schematically illustrating the electrode terminal of the battery cell of FIG. 5.
FIG. 7 is a cross-sectional view schematically illustrating the electrode terminal of the battery cell of FIG. 5.
FIG. 8 is a plan view schematically illustrating the electrode terminal of the battery cell of FIG. 5.
FIG. 9 is a cross-sectional view schematically illustrating a can housing with an electrode terminal inserted in a terminal hole thereof according to the present invention.
FIG. 10 is a cross-sectional view schematically illustrating an electrode terminal inserted in a terminal hole of a can housing with a plastically deformed portion thereof bent outward according to the present invention.
FIG. 11 is a cross-sectional view schematically illustrating an electrode assembly inserted in a can housing according to the present invention.
FIGS. 12 and 13 are cross-sectional views schematically illustrating a process of inserting a terminal bolt into a restraining tab of a current collecting plate hole according to the present invention.
FIG. 14 is a cross-sectional view schematically illustrating a battery cell according to a second embodiment of the present invention.
FIG. 15 is a cross-sectional view schematically illustrating a coupling structure of an electrode terminal of the battery cell of FIG. 14.
FIG. 16 is a cross-sectional view schematically illustrating a battery cell according to a third embodiment of the present invention.
FIG. 17 is a cross-sectional view schematically illustrating a coupling structure of an electrode terminal of the battery cell of FIG. 16.

### [DESCRIPTION OF REFERENCE NUMERALS]

1: battery cell
10: can housing
11: side wall member
12: bottom member
14: terminal hole
20: electrode assembly
21: first electrode
22: second electrode
23: metal foil
24: active material layer
25: coated portion
26: non-coated portion
27: electrode tab (notched tab)
28: separator
29: core portion
30: current collecting plate
31: flat plate portion
32: current collecting plate hole
33: restraining tab
35: protrusion
40: insulator
50: gasket
60: electrode terminal
61: terminal head
62: accommodating groove
63: terminal insert
64: bolt hole
65: plastically deformed portion
70: terminal bolt
71: bolt head
73: bolt body
74: bolt thread
80: sealing member

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery cell according to a first embodiment of the present invention will be described.

Hereinafter, battery cells according to an embodiment of the present invention will be described.

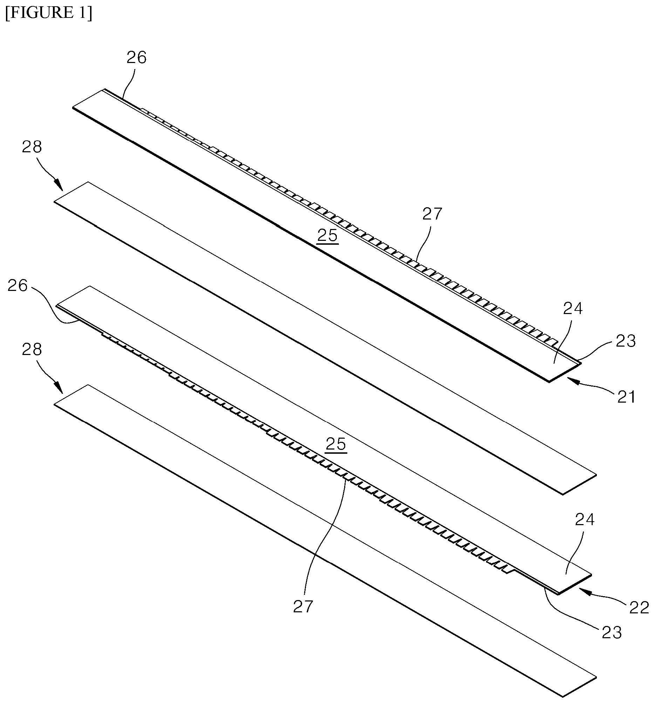

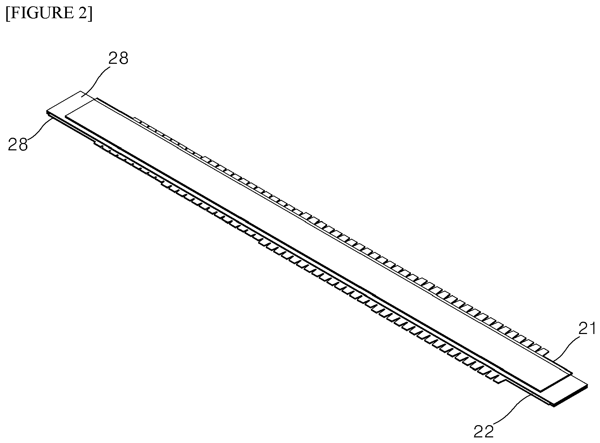

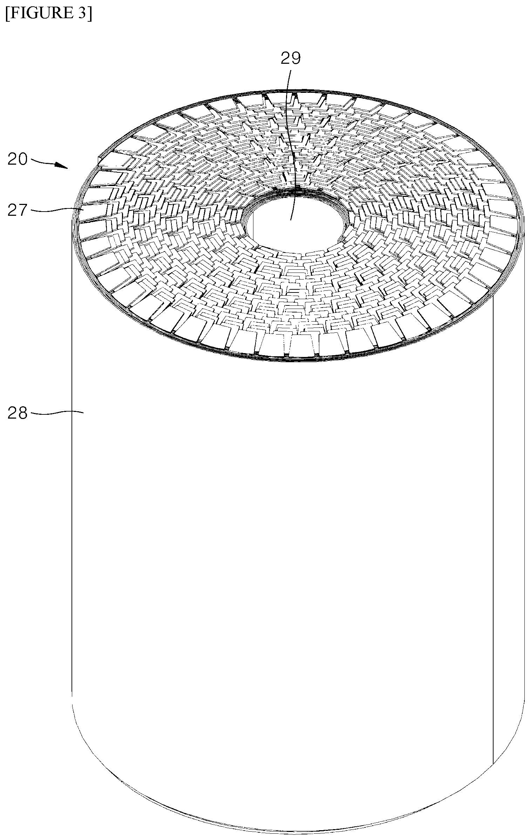

FIG. 1 is an exploded perspective view schematically illustrating electrodes and separators separated from each other constituting a battery cell according to the present invention, FIG. 2 is a perspective view schematically illustrating the electrodes and separators of FIG. 1 stacked on one another, and FIG. 3 is a perspective view schematically illustrating a cylindrical electrode assembly according to the present invention.

Referring to FIGS. 1 to 3, a cylindrical battery cell 1 according to an embodiment of the present invention includes: an electrode assembly 20; and a can housing 10 accommodating the electrode assembly 20.

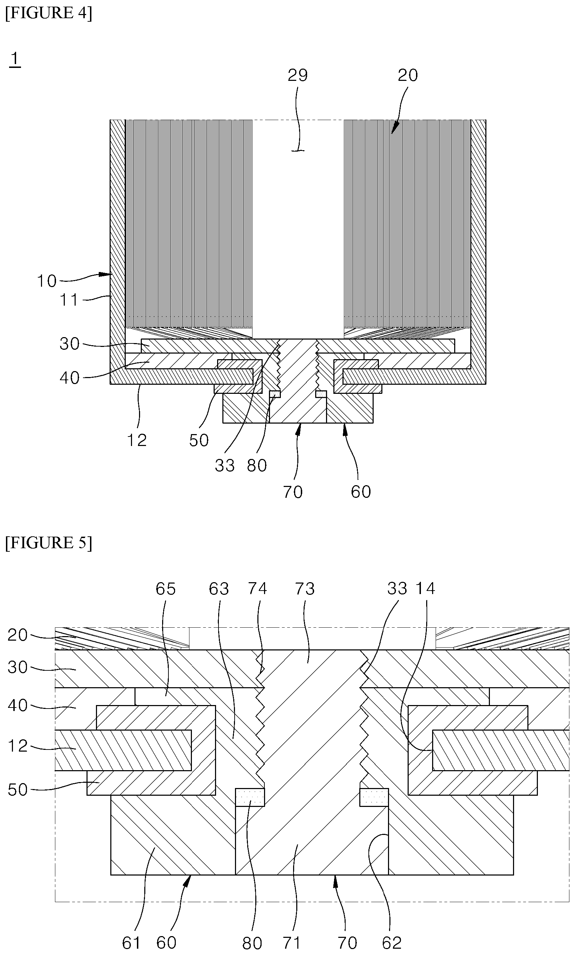

The can housing 10 (refer to FIG. 4) is cylindrical. The can housing 10 is made of a conductive material to be electrically connected to the cathode current collecting plate 30 of the electrode assembly 20.

The electrode assembly 20 includes a first electrode 21, a second electrode 22 and a separator 28 having a predetermined width and extending in a lengthwise direction as shown in FIG. 2. The electrode assembly 20 is manufactured in the form of a jelly-roll by forming a laminate wherein the first electrode 21, the separator 28, the second electrode 22 and the separator 28 are stacked in order as shown in FIG. 2, and winding the laminate around a core shaft as shown in FIG. 3. The electrode assembly 20 is cylindrical and has a core portion 29, which is an empty space, at the center thereof.

The first electrode 21 may be an anode, and the second electrode 22 may be a cathode, or vice versa.

The first electrode 21 and the second electrode 22 are manufactured in the form of sheets. The electrode sheet is manufactured by applying an active material layer 24 to the surface of a metal foil 23. The electrode has a coated portion 25 where the active material layer 24 is applied, and a non-coated portion 26 without the active material layer 24. The anode may have a non-coated portion 26 at first widthwise end thereof, and the cathode may have a non-coated portion 26 at a second widthwise end thereof.

The non-coated portion 26 is exposed or protrude in the widthwise direction from the laminate. The non-coated portion 26 itself functions as an electrode tab.

The non-coated portion 26 may be provided with notches at a predetermined interval to form notched tabs 27 in the shape of a flag. The plurality of notched tabs 27 may be arranged in a sawtooth shape along the lengthwise direction of the electrode.

In the embodiment, the notched tabs 27 having a shape of an isosceles trapezoid are exemplified. However, the notched tabs 27 may have various shapes such as a semicircle, a semi-ellipse, a triangle, a rectangle, a parallelogram, etc.

In addition, in the embodiment, the notched tabs 27 having the same width and arranged along the lengthwise direction are exemplified. However, the width of the notched tabs 27 may be gradually or stepwisely increased from the core toward the outer circumference.

In addition, in the embodiment, the notched tabs 27 with gradually increasing height from the core toward the outer circumference are exemplified. However, the height of the notched tabs 27 may be a constant or may gradually decrease.

In addition, in the embodiment, exemplified is a structure with notched tabs 27 removed from predetermined sections of the centripetal end and the centrifugal end portion of the non-coated portion 26. However, it is also apparent that the notched tabs 27 are not removed from the centripetal end portion of the non-coated portion 26, and the notched tabs 27 are not removed from the centrifugal end portion of the non-coated portion 26.

In the jelly-roll type electrode assembly 20, the notched tabs 27 may be bent in the radial direction and flattened as shown in FIG. 3. The notched tabs 27 may be bent radially inward or radially outward. In the embodiment, exemplified is a structure with the notched tabs 27 bent radially inward.

The notched tabs 27 may be bent one by one during the process of forming the jelly-roll type electrode assembly 20 by winding the laminate. Alternatively, the notched tabs 27 may be bent all at once after the jelly-roll type electrode assembly 20 is formed by winding the laminate.

The notched tabs 27 of the first electrode 21 and the notched tabs 27 of the second electrode 22 that are folded and overlapped in the radial direction may provide a plane substantially perpendicular to the axial direction at two axial ends of the electrode assembly 20.

As shown in FIG. 4, the current collecting plate 30 may be bonded to the substantially flat surface provided by the bent notched tabs 27 exposed at the two axial ends of the electrode assembly 20.

In the embodiment, the current collecting plate 30 bonded to a first axial end portion of the electrode assembly 20 may be an cathode collecting plate, and the current collecting plate bonded to a second axial end portion of the electrode assembly 20 may be an anode collecting plate. However, the current collecting plate 30 bonded to the first axial end may be an anode collecting plate, and the current collecting plate bonded to the second axial end may be a cathode collecting plate.

The anode current collecting plate may include aluminum, and the cathode current collecting plate may include copper. However, the material is not limited thereto.

The current collecting plate 30 may be manufactured by punching, trimming, piercing, and bending a metal sheet. However, it is apparent that the manufacturing process is not limited thereto.

The can housing 10 includes: a bottom member 12; a side wall member 11 connected to the bottom member 12 and extending in the axial direction; and a lid (not shown) covering the open end portion of the side wall member 11.

The bottom member 12 may have a disk shape, and the side wall member 11 may have a circular tube shape. The bottom member 12 and the side wall member 11 may be formed integrally or connected by welding.

The bottom member 12 and the side wall member 11 may be manufactured by subjecting a metal sheet of steel with nickel plated thereon to deep drawing, and trimming the same with a punch while holding the front end portion of the side wall member 11 with a blank holder. Apparently, the material of the can housing 10 is not limited thereto.

According to the embodiment of the cylindrical battery cell 1, the current collecting plate 30 is bonded to the first axial end, i.e., the bottom side, of the electrode assembly 20. For example, the back surface of the current collecting plate 30 and the electrode tab 27 may be welded by irradiating a laser on the surface of the current collecting plate 30. The periphery of the current collecting plate 30 corresponds to the electrode tabs 27 of the electrode assembly 20, and the center of the current collecting plate 30 is arranged to block the core portion 29 of the electrode assembly 20.

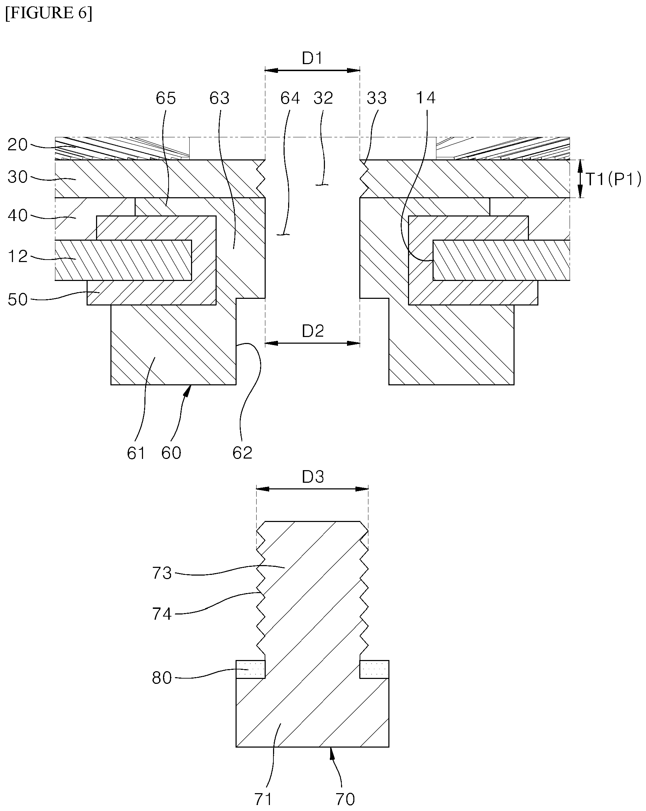

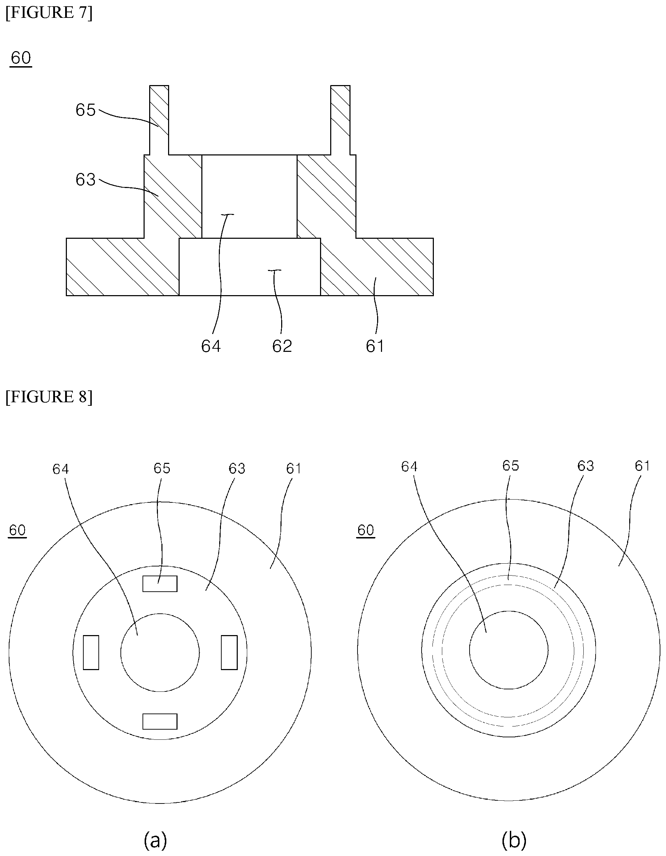

FIG. 4 is a cross-sectional view schematically illustrating a battery cell according to a first embodiment of the present invention, FIG. 5 is a cross-sectional view schematically illustrating a coupling structure of an electrode terminal of the battery cell of FIG. 4, FIG. 6 is an exploded view schematically illustrating the electrode terminal of the battery cell of FIG. 5, FIG. 7 is a cross-sectional view schematically illustrating the electrode terminal of the battery cell of FIG. 5, and FIG. 8 is a plan view schematically illustrating the electrode terminal of the battery cell of FIG. 5.

Referring to FIGS. 4 to 8, a battery cell 10 according to the first embodiment of the present invention includes: a can housing 10; a current collecting plate 30; an insulator 40; an electrode terminal 60; and a terminal bolt 70.

The can housing 10 may accommodate an electrode assembly 20 therein. The can housing 10 may be cylindrical. The can housing 10 may include a bottom member 12 and a side wall member 11. A terminal hole 14 is provided at the bottom member 12 of the can housing 10. The terminal hole 14 having a circular shape may be provided at the center of the bottom member 12.

The current collecting plate 30 may be bonded to the axial end portion of the electrode assembly 20. The current collecting plates 30 bonded to the two axial ends of the electrode assembly 20 may be an anode current collecting plate and a cathode current collecting plate, respectively. The anode current collecting plate may include aluminum, and the cathode current collecting plate may include copper. However, the material is not limited thereto.

The current collecting plate 30 may be manufactured by punching, trimming, piercing, or/and banding a metal plate. The current collecting plate 30 has a diameter smaller than that of the electrode assembly 20 and the inner circumferential surface of the can housing 10.

The insulator 40 may be disposed between the can housing 10 and the current collecting plate 30. The insulator 40 is made of an insulating material to electrically insulate the bottom member 12 of the can housing 10 and the current collecting plate 30. The insulator 40 may have a disk shape with a diameter larger than the diameter of the current collecting plate 30.

The battery cell 1 includes a gasket 50 interposed between the periphery of the electrode terminal 60 and the terminal hole 14. The gasket 50 electrically insulates the periphery of the electrode terminal 60 from the terminal hole 14.

The gasket 50 may be fitted in the terminal hole 14 while being in contact with the inner circumferential surface of the terminal hole 14. The gasket 50 is made of an insulating material. The gasket 50 may have a tube shape to be inserted into the terminal hole 14, and be provided with a flange at one end. The flange is the portion that is in contact with the outer side surface of the can housing 10. The gasket 50 may be manufactured entirely of an elastic (stretchable) compressible material.

The electrode terminal 60 is inserted into the terminal hole 14 and plastically deformed to extend outer than the periphery of the terminal hole 14 to be fixed to the bottom member 12 of the can housing 10. Here, the two axial ends of the electrode terminal 60 are pressed against the periphery of the terminal hole 14 in the axial direction. The electrode terminal 60 is electrically isolated from the can housing 10 by the gasket 50 and is electrically connected to the anode current collecting plate 30 so as to function as an anode terminal, for example.

The terminal bolt 70 may be fastened to the current collecting plate 30 after being passed through the electrode terminal 60 to be fixed to the current collecting plate 30. The terminal bolt 70 may include a bolt head 71 and a bolt body 73. The bolt head 71 may have a polygonal or circular cross-section. The bolt body 73 may extend in the axial direction from the bolt head 71. Threads are provided on the surface of the bolt body 73, and the axial length of the threads may be longer than the height of the current collecting plate hole 32. In some embodiments, the threads may be provided along the lengthwise direction throughout the bolt body 73.

Accordingly, since the terminal bolt 70 is fastened and restrained to the current collecting plate 30, the electrode terminal 60 and the current collecting plate 30 are not required to be welded. In addition, the terminal bolt 70 may electrically connect the electrode terminal 60 to the current collecting plate 30. The current collecting plate 30 may be electrically connected to the electrode terminal 60 through the terminal bolt 70 or electrically connected to the electrode terminal 60 directly. Accordingly, unlike the conventional battery cell, since the welding of the electrode terminal 60 and the current collecting plate 30 may be omitted, the separator of the electrode assembly 20 may be prevented from being damaged by spatter or thermal energy generated during welding. In addition, the anode and cathode may be prevented from electrically coming in contact with each other due to damage of the separator, and the possibility of a short circuit or fire may be significantly reduced.

In addition, it is not necessary to strongly press and deform the current collecting plate 30 with a welding electrode rod for welding and to bring the current collecting plate 30 into contact with the electrode terminal 60. Accordingly, the current collecting plate 30 may be prevented from pre-tensioning.

The current collecting plate 30 may be provided with a restraining tab 33 into which a terminal bolt 70 is screwed. The restraining tab 33 may be provided on the periphery of the inner circumferential surface of the current collecting plate 30 defining the current collecting plate hole 32. In one embodiment, the restraining tab 33 may be a thread having the same lead as the bolt thread 74 of the terminal bolt 70. The inner diameter of the restraining tab 33 is complementary to the outer diameter of the bolt thread 74 such that the screw coupling between the bolt thread 74 and the restraining tab 33 may be facilitated. Accordingly, the phenomenon in which the restraining tab 33 or the bolt thread 74 is worn and particles are generated during the screw coupling may be prevented.

The diameter D1 of the restraining tab 33 may be the same as or slightly larger than the diameter D2 of the bolt hole 64 of the electrode terminal 60.

The current collecting plate 30 has a form of a flat plate, and the height of the restraining tab 33 may be the same as the thickness T1 of the current collecting plate 30. Accordingly, as the thickness T1 of the current collecting plate 30 increases, the height P1 of the restraining tab 33 increases. The height P1 of the restraining tab 33 may be adjusted in consideration of the required fastening force of the terminal bolt 70 and the current collecting plate 30.

The electrode terminal 60 includes a terminal head 61 and a terminal insert 63.

The terminal head 61 may be pressed against the periphery of the terminal hole 14. The outer diameter of the terminal head 61 may be larger than the inner diameter of the terminal hole 14. The terminal head 61 may be circular or polygonal. When the electrode terminal 60 is inserted into the terminal hole 14, the terminal head 61 is caught on the periphery of the terminal hole 14 to prevent further insertion.

The terminal insert 63 extends in the axial direction from the terminal head 61. The terminal insert 63 is inserted into the terminal hole 14. In a structure provided with an insulator 40, the terminal insert 63 may be inserted into the insulator 40. A terminal bolt 70 may penetrate the terminal insert 63. The terminal insert 63 may be in contact with the periphery of the lower surface of the current collecting plate 30 without being inserted into the current collecting plate hole 32. The terminal insert 63 may be overall cylindrical.

The electrode terminal 60 may further include a plastically deformed portion 65 extending from the terminal insert 63 and bent radially outward. The plastically deformed portion 65 maintains the bent state even when the external force is removed. The plastically deformed portion 65 may be parallel to the end portion of the terminal insert 63 in axial direction before deformation. Since the plastically deformed portion 65 is caught and restrained by the periphery of the terminal hole 14 while being bent axially outward from the terminal insert 63, the electrode terminal 60 may be prevented from being ejected or separated from the terminal hole 14 by the internal gas pressure of the can housing 10.

As the plastically deformed portion 65 is bent, the plastically deformed portion 65 may press the gasket 50. In some embodiments, the plastically deformed portion 65 may press the insulator 40. In some embodiments, the plastically deformed portion 65 may press the gasket 50 and the insulator 40.

The plastically deformed portion 65 may include a plastically deformed rib extending in the axial direction at the end portion of the terminal insert 63. In some embodiments, a plurality of the plastically deformed ribs may be provided so as to be arranged along the circumferential direction of the terminal insert 63. The plurality of plastically deformed ribs may be plastically deformed simultaneously by a press member inserted into the core portion of the electrode assembly. In some embodiments, the plastically deformed rib may have a circular tube shape extending along the circumferential direction of the terminal insert 63. The plastically deformed rib may be plastically deformed by the press member inserted into the core portion of the electrode assembly.

The plastically deformed portion 65 and the terminal head 61 primarily restrain the electrode terminal 60 to the terminal hole 14. In addition, the terminal bolt 70 is fastened to the current collecting plate 30 to secondarily restrain the electrode terminal 60 to the current collecting plate 30. Accordingly, the electrode terminal 60 may be prevented from being separated or detached from the terminal hole 14 or the current collecting plate 30. Since the electrode terminal 60 is doubly restrained as described above, the restraining force and structural rigidity of the electrode terminal 60 may be significantly increased.

In addition, since the plastically deformed portion 65 is in contact with one surface of the current collecting plate 30 and the terminal bolt 70 is in contact with the current collecting plate hole 32 and the electrode terminal 60, the contact area between the anode terminal constituted by the electrode terminal 60 and the terminal bolt 70 and the current collecting plate 30 may be increased. Accordingly, since the current conduction path is significantly increased, the resistance loss of the battery cell may be reduced.

A bolt hole 64 may be provided in the terminal insert 63 such that the bolt body 73 of the terminal bolt 70 may be inserted thereinto. The bolt hole 64 may be arranged to be parallel to the axial direction of the terminal insert 63 and correspond to the current collecting plate hole 32.

The height P1 of the current collecting plate hole 32 may be equal to or slightly smaller than the thickness T1 of the current collecting plate 30.

The diameter D2 of the bolt hole 64 may be smaller than the diameter D3 of the bolt body 73 of the terminal bolt 70 (D2<D3). For example, the diameter D2 of the bolt hole 64 may be smaller by the height of the thread of the bolt body 73.

Accordingly, the periphery of the bolt hole 64 may be plastically deformed as the bolt body 73 is inserted. As the periphery of the bolt hole 64 is plastically deformed, the plastically deformed portion of the bolt hole 64 may be press-fitted between the threads of the bolt body 73. In addition, as the bolt body 73 is press-fitted into the bolt hole 64, the terminal insert 63 is radially spread outward (expanded) and pressed in the radial direction against the inner circumferential surface of the terminal hole 14. Since the terminal bolt 70 is pressed and fastened by the reaction force applied toward the center from the terminal insert 63, the fastening force between the terminal bolt 70 and the electrode terminal 60 may be significantly increased. As a result, even when the battery cell is exposed to an environment of continuous vibration, the phenomenon of the terminal bolt 70 being loosened may be prevented in advance. In addition, since the bolt body 73 digs into the inner circumferential surface of the bolt hole 64, the sealing force between the bolt body 73 and the terminal insert 63 may be increased.

The terminal head 61 may be provided with an accommodating groove 62 to accommodate the bolt head 71 of the terminal bolt 70. The accommodating groove 62 may have a circular cross-section such that the terminal bolt 70 may be rotated. The depth of the accommodating groove 62 may be approximately the same as the thickness of the bolt head 71.

The battery cell 10 may further include a sealing member 80 installed between the bolt head 71 of the terminal bolt 70 and the end portion of the accommodating groove 62 of the terminal head 61. The sealing member 80 may be an O-ring. The sealing member 80 may seal the gap between the bolt head 71 and the accommodating groove 62 to prevent leakage of electrolyte. In addition, it is possible to prevent external air from penetrating into the can housing 10 through the gap between the bolt head 71 and the accommodating groove 62.

A manufacturing method of a battery cell according to a first embodiment of the present invention described above will be described.

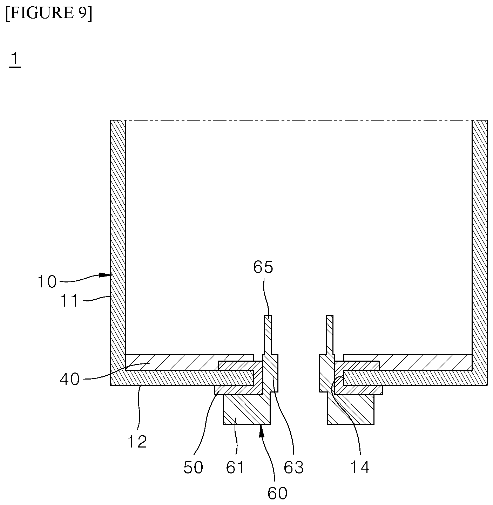

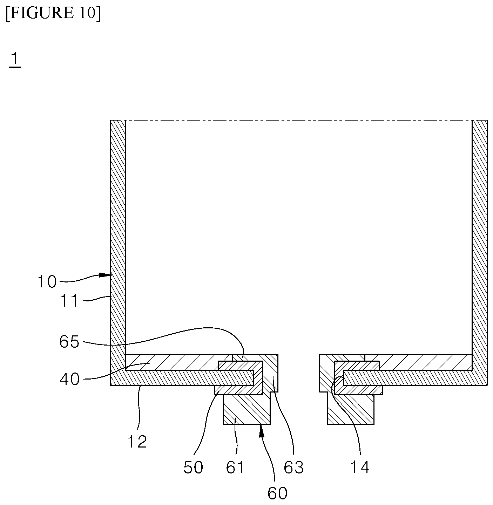

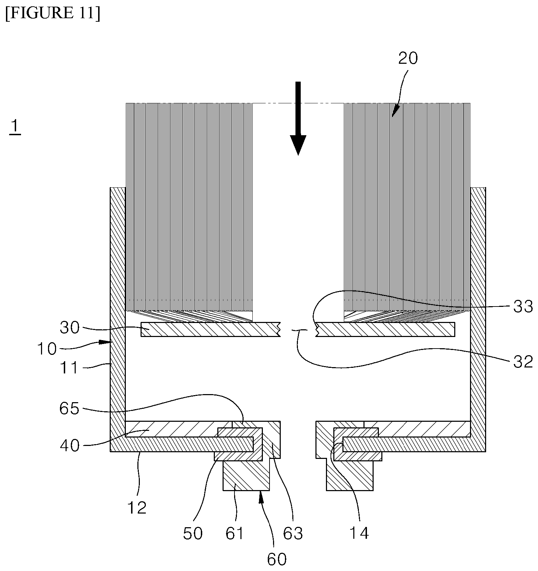

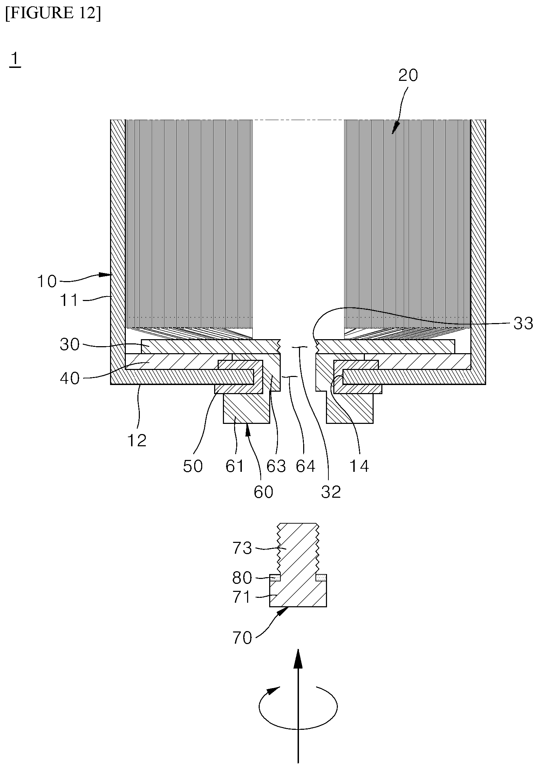

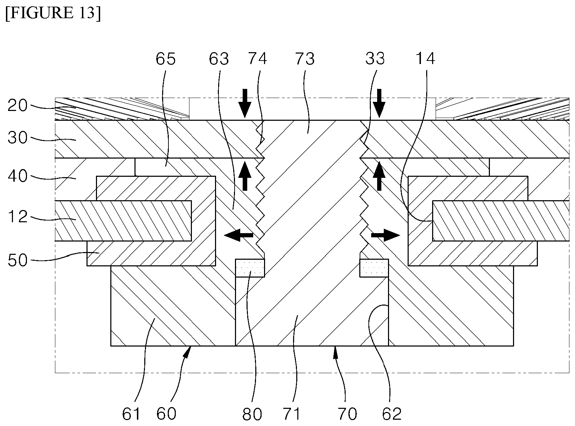

FIG. 9 is a cross-sectional view schematically illustrating a can housing with an electrode terminal inserted in a terminal hole thereof according to the present invention, FIG. 10 is a cross-sectional view schematically illustrating an electrode terminal inserted in a terminal hole of a can housing with a plastically deformed portion thereof bent outward according to the present invention, FIG. 11 is a cross-sectional view schematically illustrating an electrode assembly inserted in a can housing according to the present invention, and FIGS. 12 and 13 are cross-sectional views schematically illustrating a process of inserting a terminal bolt into a restraining tab of a collector plate hole according to the present invention.

Referring to FIG. 9, the can housing 10 equipped with the terminal hole 14 is prepared (refer to FIG. 9). The terminal hole 14 is provided at the center of the bottom member 12 of the can housing 10. The terminal hole 14 is located at the bottom of the can housing 10.

The gasket 50 is inserted into the terminal hole 14 in the axial direction. When the flange of the gasket 50 comes into contact with the outer side surface of the can housing 10, the insertion of the gasket 50 is stopped.

After the gasket 50 is inserted into the terminal hole 14, the insulator 40 is placed on the inner side surface of the bottom member 12. A hole having a size suitable for the terminal insert 63 of the electrode terminal 60 to pass through is provided at the center of the insulator 40.

With the gasket 50 inserted into the terminal hole 14, the electrode terminal 60 is inserted into the terminal hole 14 from the axially outer side of the terminal hole 14. An electrode terminal 60 is provided with a terminal head 61, a terminal insert 63 extending in the axial direction, and a plastically deformed portion 65 extending from an axial end portion of the terminal insert 63. The terminal insert 63 and the plastically deformed portion 65 pass through a gasket 50. The gasket 50 electrically insulates the electrode terminal 60 from the can housing 10.

Referring to FIG. 10, the plastically deformed portion 65 of the electrode terminal 60 is bent radially outward to fix the electrode terminal 60 to the terminal hole 14. Here, the press member (not shown) is lowered toward the inside of the can housing 10 to bend the plastically deformed portion 65 radially outward. The plastically deformed portion 65 is bent radially to press the gasket 50. In some embodiments, the insulator 40 may be pressed together.

Referring to FIG. 11, an electrode assembly with a current collecting plate 30 welded thereto is inserted into the can housing 10. The current collecting plate 30 is positioned to face the electrode terminal 60, and the current collecting plate hole 32 of the current collecting plate 30 is aligned with the bolt hole 64 of the electrode terminal 60.

The restraining tab 33 provided at the periphery of the current collecting plate hole 32 is concentric with the bolt hole 64. Here, the inner diameter D1 of the restraining tab 33 is the same as or slightly larger than the diameter D2 of the bolt hole 64, and the diameter D3 of the terminal bolt 70 is larger than the diameter D2 of the bolt hole 64 (refer to FIG. 6).

Referring to FIGS. 12 and 13, after the terminal bolt 70 is passed through the bolt hole 64, the terminal bolt 70 is fastened to the restraining tab 33. Since the diameter of the bolt hole 64 is smaller than the diameter of the bolt body 73 of the terminal bolt 70, the periphery of the bolt hole 64 is plastically deformed as the bolt body 73 is inserted into the bolt hole 64 and the restraining tab 33.

Here, the end portion of the bolt body 73 is screwed to the restraining tab 33, and the bolt body 73 presses the terminal insert 63 radially outward to push the terminal insert 63 outward. Reflectively, the deformed portion of the terminal insert 63 is pressed against the bolt body 73 as pushed between the threads of the bolt body 73. In order to achieve this, the electrode terminal 60 may be made of a metal softer than the terminal bolt 70. As a result, the electrode terminal 60, the current collecting plate 30 and the can housing 10 are mutually fixed by the screw coupling force of the terminal bolt 70 and the restraining tab 33 and the pressing force of the terminal bolt 70 and the terminal insert 63.

Accordingly, since the bonding force and structural rigidity of the electrode terminal 60 are significantly increased, the electrode terminal 60 may be prevented from being ejected or detached from the terminal hole 14 during thermal runaway of the battery pack.

Next, a battery cell according to a second embodiment of the present invention will be described. Since the second embodiment is substantially the same as the first embodiment except for the electrode terminal 60 and the terminal bolt 70, the same reference numerals are given to the same elements and the description thereof is omitted.

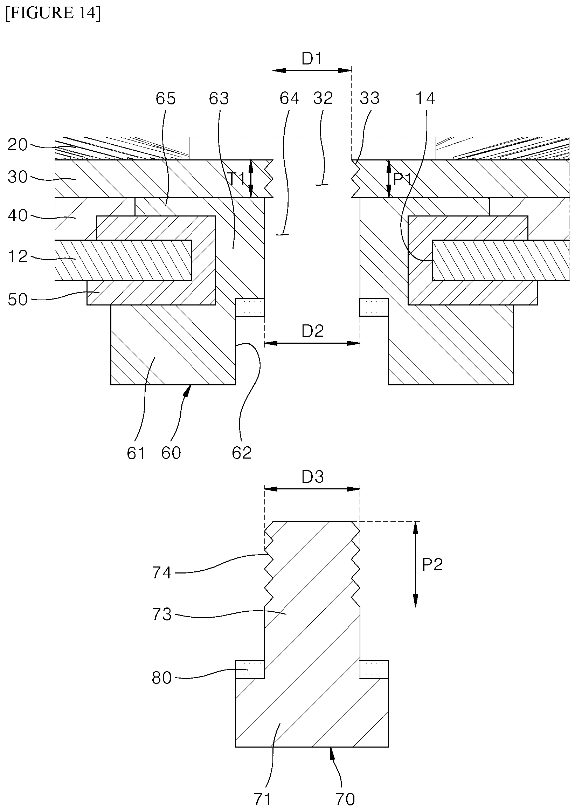

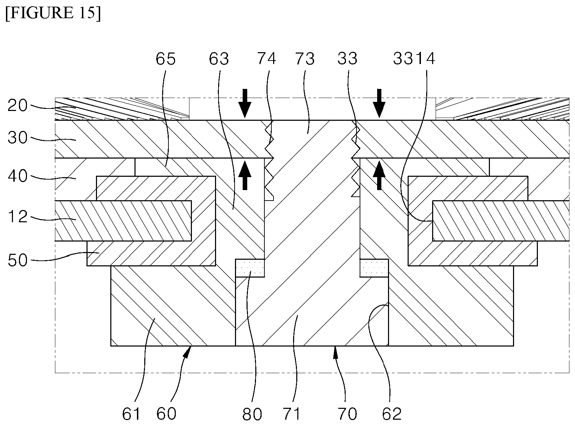

FIG. 14 is a cross-sectional view schematically illustrating a battery cell according to a second embodiment of the present invention, and FIG. 15 is a cross-sectional view schematically illustrating a coupling structure of an electrode terminal of the battery cell of FIG. 14.

Referring to FIGS. 14 and 15, the battery cell 1 according to the second embodiment of the present invention includes: a can housing 10; a current collecting plate 30; an insulator 40; an electrode terminal 60; and a terminal bolt 70.

The electrode terminal 60 includes a terminal head 61 and a terminal insert 63. In addition, the electrode terminal 60 may further include a plastically deformed portion 65.

A bolt hole 64 may be provided in the terminal insert 63 such that the bolt body 73 of the terminal bolt 70 may be inserted thereinto. The bolt hole 64 may be arranged to be parallel to the axial direction of the terminal insert 63 and aligned with the current collecting plate hole 32 in the axial direction.

The diameter D2 of the bolt hole 64 may be substantially the same as or slightly larger than the diameter D3 of the bolt body 73 of the terminal bolt 70 (D2=D3). Here, the inner diameter of the restraining tab 33 may be smaller than the diameter of the bolt hole 64. In addition, the outer circumferential surface of the bolt body 73 is provided with a bolt thread 74, and the axial length P2 of the bolt thread 74 may be slightly longer than the height P1 of the restraining tab 33. Apparently, the bolt thread 74 may be provided on the entirety of the bolt body 73.

Since the diameter D3 of the bolt body 73 is equal to or slightly smaller than the diameter D2 of the bolt hole 64, the bolt hole 64 is hardly deformed plastically when the bolt body 73 is screwed to the restraining tab 33. In addition, when the bolt head 71 and the current collecting plate 30 press the terminal insert 63 from two axial ends by the screw coupling, the terminal insert 63 may be compressed to the bolt body 73 while shrinking in the axial direction. In order to achieve this, the electrode terminal 60 may be made of a metal softer than the terminal bolt 70. As a result, the electrode terminal 60, the current collecting plate 30 and the can housing 10 are mutually fixed by the screw coupling force of the terminal bolt 70 and the restraining tab 33 and the pressing force of the terminal bolt 70 and the terminal insert 63.

Here, the elastic force of the sealing member 80 is delivered to the restraining tab 33 of the current collecting plate 30 through the terminal bolt 70 such that the current collecting plate 30 comes in contact with the electrode terminal 60. In addition, the elastic force may function as a tensioner to prevent the terminal bolt 70 from loosening.

Next, a battery cell according to a third embodiment of the present invention will be described. Since the third embodiment is substantially the same as the first embodiment except for the current collecting plate 30, the same drawing reference numerals will be given to the same elements and the description thereof is omitted.

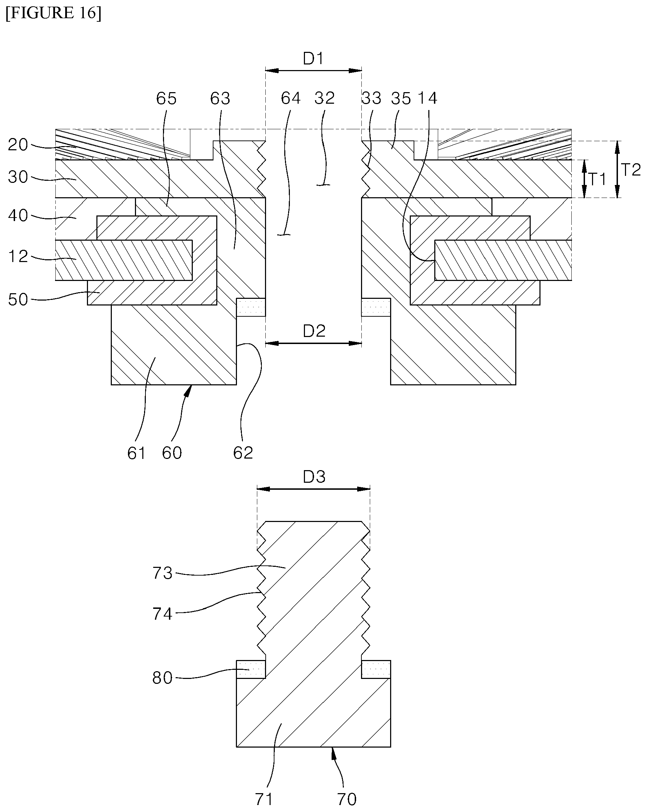

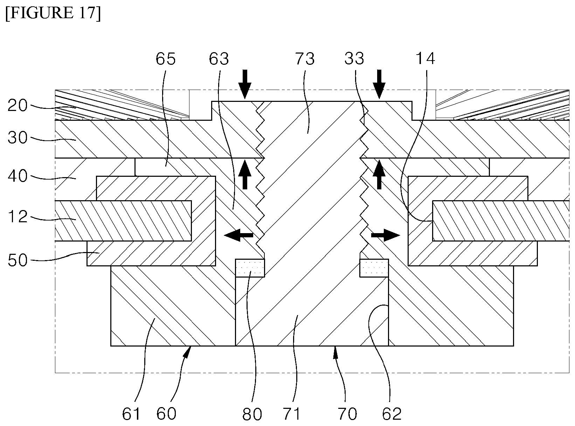

FIG. 16 is a cross-sectional view schematically illustrating a battery cell according to a third embodiment of the present invention, and FIG. 17 is a cross-sectional view schematically illustrating a coupling structure of an electrode terminal of the battery cell of FIG. 16.

Referring to FIGS. 16 and 17, a battery cell 1 according to the third embodiment of the present invention includes: a can housing 10; a current collecting plate 30; an insulator 40; an electrode terminal 60; and a terminal bolt 70.

The electrode terminal 60 includes a terminal head 61 and a terminal insert 63. In addition, the electrode terminal 60 may further include a plastically deformed portion 65.

The current collecting plate 30 includes: a flat plate portion 31 in the form of a plate, and a protrusion 35 protruding from the flat plate portion 31 at a position corresponding to the terminal hole 14. The flat plate portion 31 may have a shape of a flat annular plate, and the protrusion 35 may have a ring shape defining the current collecting plate hole 32. The flat plate portion 31 and the protrusion 35 are concentric with the current collecting plate hole 32.

The thickness T2 of the protrusion 35 may be greater than the thickness T1 of the flat plate portion 31. For example, the thickness T2 of the protrusion 35 may be approximately 10% to 100% of the thickness T1 of the flat plate portion 31. When the flat plate portion 31 is thick, the thickness T1 of the flat plate portion 31 may be close to 100% of the thickness T2 of the protrusion 35, and when the flat plate portion 31 is thin, the thickness T1 of the flat plate portion 31 may be close to 10% of the thickness T2 of the protrusion 35.

A restraining tab 33 is provided on the inner circumferential surface of the current collecting plate hole 32. As the thickness T2 of the protrusion 35 increases, the height P2 of the restraining tab 33 may be increased. Since the terminal bolt 70 is screw to the restraining tab 33, the fastening force between the restraining tab 33 and the terminal bolt 70 may be increased in proportion to the height P2 of the restraining tab 33.

The inner diameter D1 of the current collecting plate hole 32 may be the same as or slightly smaller than the diameter D2 of the bolt hole 64. The height P2 of the current collecting plate hole 32 and the restraining tab 33 may be the same as or slightly smaller than the thickness T2 of the protrusion 35.

The diameter D2 of the bolt hole 64 may be smaller than the diameter D3 of the bolt body 73. For example, the diameter D2 of the bolt hole 64 may be as small as the height of the bolt thread 74 of the bolt body 73.

Accordingly, the periphery of the bolt hole 64 may be plastically deformed as the bolt body 73 is inserted. As the periphery of the bolt hole 64 is plastically deformed, the plastically deformed portion of the bolt hole 64 may be press-fitted between the threads of the bolt body 73. In addition, as the bolt body 73 is press-fitted into the bolt hole 64, the terminal insert 63 is radially spread outward (expanded) and pressed in the radial direction against the inner circumferential surface of the terminal hole 14. Reflectively, since the terminal bolt 70 is pressed and fastened by the reaction force applied toward the center from the terminal insert 63, the fastening force between the terminal bolt 70 and the electrode terminal 60 may be significantly increased. As a result, even when the battery cell is exposed to an environment of continuous vibration, the phenomenon of the terminal bolt 70 being loosened may be prevented in advance. In addition, since the bolt body 73 digs into the inner circumferential surface of the bolt hole 64, the sealing force between the bolt body 73 and the terminal insert 63 may be increased.

Meanwhile, in FIGS. 16 and 17, a structure in which the protrusion 35 of the current collecting plate 30 protrudes in a direction away from the electrode terminal 60 is exemplified. However, the protrusion may protrude in a direction toward the electrode terminal 60, or may protrude in directions both toward and away from the electrode terminal 60.

In addition, in the third embodiment, instead of the size relationship between the diameter D2 of the bolt hole 64 and the diameter D3 of the bolt body 73, the size relationship of the second embodiment may be applied. Similarly, the structure of the protrusion 35 of the third embodiment may be applied to the second embodiment. In this way, the features of the embodiments may be applied interchangeably or additionally. It is apparent that some of the features of the embodiments may be omitted.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell comprising:
a can housing accommodating an electrode assembly therein and provided with a terminal hole;
a current collecting plate disposed at an axial end portion of the electrode assembly;
an electrode terminal inserted into the terminal hole; and
a terminal bolt penetrating the electrode terminal and fastened to and restrained by the current collecting plate.

2. The battery cell of claim 1, wherein the electrode terminal comprises:
a terminal head compressing a periphery of the terminal hole; and
a terminal insert extending from the terminal head and inserted into the terminal hole,
wherein the terminal bolt penetrates the terminal insert.

3. The battery cell of claim 2, wherein the electrode terminal further comprises: a plastically deformed portion extending from the terminal insert and bent so as to compress the periphery of the terminal hole while facing the terminal head.

4. The battery cell of claim 3, wherein the plastically deformed portion comprises: a plastically deformed rib arranged along a circumferential direction at an end portion of the terminal insert.

5. The battery cell of claim 4, wherein the plastically deformed rib extends continuously or intermittently along the circumferential direction.

6. The battery cell of claim 2, wherein the terminal insert is provided with a bolt hole where a bolt body of the terminal bolt is inserted.

7. The battery cell of claim 6, wherein an inner diameter of the bolt hole is smaller than an outer diameter of the bolt body such that a periphery of the bolt hole is plastically deformed as the bolt body is inserted.

8. The battery cell of claim 6, wherein a diameter of the bolt hole is equal to or larger than a diameter of the terminal bolt.

9. The battery cell of claim 6, wherein the terminal head is provided with an accommodating groove for accommodating a bolt head of the terminal bolt.

10. The battery cell of claim 1, wherein the current collecting plate is provided with a restraining tab where the terminal bolt is screwed.

11. The battery cell of claim 10, wherein the current collecting plate has a flat plate shape, and
a height of the restraining tab is equal to or smaller than a thickness of the current collecting plate.

12. The battery cell of claim 10, wherein the current collecting plate comprises: a flat plate portion having a flat plate shape; and a protrusion protruding in an axial direction from the flat plate portion at a position corresponding to the terminal hole, and
the restraining tab penetrates the protrusion.

13. The battery cell of claim 1, further comprising: a sealing member installed between a bolt head of the terminal bolt and a bottom surface of an accommodating groove of the terminal head.

14. The battery cell of claim 1, further comprising: a gasket interposed between an inner circumferential surface of the terminal hole and an outer circumferential surface of the electrode terminal to electrically insulate the electrode terminal from and seal the can housing.

15. A manufacturing method of a battery cell, comprising:
preparing a can housing provided with a terminal hole:
inserting a gasket into the terminal hole in an axial direction;
inserting an electrode terminal into the terminal hole from axially outer side of the terminal hole;
restraining the electrode terminal in the terminal hole by bending a plastically deformed portion of the electrode terminal radially outward;
inserting an electrode assembly with a current collecting plate welded thereto into the can housing and arranging a restraining tab of the current collecting plate to correspond to a bolt hole of the electrode terminal; and
fastening a terminal bolt to the restraining tab after passing the terminal bolt through the bolt hole.

16. The manufacturing method of claim 15, wherein a diameter of the bolt hole is smaller than that of a bolt body of the terminal bolt such that a periphery of the bolt hole is plastically deformed as the bolt body is inserted.

17. The manufacturing method of claim 15, wherein the current collecting plate comprises: a flat plate portion having a flat plate shape; and a protrusion protruding in an axial direction from the flat plate portion at a position corresponding to the terminal hole, and
the restraining tab penetrates the protrusion.
